# EUROPÄISCHE PATENTSCHRIFT

(11) **EP 2 323 488 B1**
(45) Veröffentlichungstag und Bekanntmachung des Hinweises auf die Patenterteilung: **18.04.2018**
(21) Anmeldenummer: 09778023.3
(22) Anmeldetag: 17.08.2009
(51) Int. Cl.: A01P 21/00, A01N 47/40

(54) **METHODE ZUR VERBESSERUNG DES PFLANZENWACHSTUMS**
METHOD FOR IMPROVING PLANT GROWTH
PROCÉDÉ POUR AMÉLIORER LA CROISSANCE DE VÉGÉTAUX

(30) Priorität: 29.08.2008 DE 102008041695
(43) Veröffentlichungstag der Anmeldung: 25.05.2011
(73) Patentinhaber: Bayer Intellectual Property GmbH, 40789 Monheim am Rhein (DE)
(72) Erfinder: JESCHKE, Peter, 51467 Bergisch Gladbach (DE); THIELERT, Wolfgang, 51519 Odenthal (DE); HUNGENBERG, Heike, 40764 Langenfeld (DE)
(74) Vertreter: BIP Patents
(86) Internationale Anmeldenummer: PCT/EP2009/006064
(87) Internationale Veröffentlichungsnummer: WO 2010/022897

(56) Entgegenhaltungen:
- WO-A1-2006/122662
- WO-A1-2007/149134

## Beschreibung

Die Erfindung betrifft Verfahren, die unter Verwendung von Sulfoximin der Formel (I-8) zur Verbesserung des Pflanzenwachstums und/oder zur Steigerung der Widerstandsfähigkeit von Pflanzen gegenüber abiotischen Stressfaktoren, geeignet sind.

Es ist bekannt, dass Pflanzen auf natürliche Stressbedingungen, wie beispielsweise Kälte, Hitze, Trockenheit, Verwundung, Pathogenbefall (Viren, Bakterien, Pilze), Insekten etc. aber auch auf Herbizide mit spezifischen oder unspezifischen Abwehrmechanismen reagieren (Pflanzenbiochemie, S. 393-462, Spektrum Akademischer Verlag, Heidelberg, Berlin, Oxford, Hans W. Heldt, 1996.; Biochemistry and Molecular Biology of Plants, S. 1102-1203, American Society of Plant Physiologists, Rockville, Maryland, eds. Buchanan, Gruissem, Jones, 2000). Dabei dienen z. B. durch Verwundung entstandene Zellwandbestandteile oder spezifische vom Pathogen stammende Signalsubstanzen als Induktoren pflanzlicher Signaltransduktionsketten, die am Ende zur Bildung von gegen den Stressfaktor gerichteten Abwehrmolekülen führen. Hierbei kann es sich beispielsweise um (a) niedermolekulare Substanzen, wie z.B. Phytoalexine, (b) nicht-enzymatische Proteine, wie z. B. "Pathogenesis-related proteins" (PR-Proteine), (c) enzymatische Proteine, wie beispielsweise Chitinasen, Glucanasen, oder (d) um spezifische Inhibitoren essentieller Proteine, wie beispielsweise um Protease-Inhibitoren, Xylanase-Inhibitoren, handeln, welche das Pathogen direkt angreifen oder seine Proliferation behindern (Dangl and Jones, Nature 411, 826-833, 2001; Kessler and Baldwin, Annual Review of Plant Biology, 53, 299-328, 2003).

Ein zusätzlicher Abwehrmechanismus ist die sogenannte hypersensitive Reaktion (HR), die über oxidativen Stress vermittelt wird und zum Absterben von Pflanzengewebe im Bereich eines Infektionsherdes führt, wodurch eine Ausbreitung von Pflanzenpathogenen, die auf lebende Zellen angewiesen sind, verhindert wird (Pennazio, New Microbiol. 18, 229-240, 1995).

Im weiteren Verlauf einer Infektion werden durch pflanzeneigene Botenstoffe Signale in nicht befallene Gewebe weitergegeben, die auch dort zur Auslösung von Abwehrreaktionen führen und die Entstehung von Sekundärinfektionen behindern (Systemic acquired resistance, SAR) (Ryals et al., The Plant Cell 8, 1809-1819, 1996).

Eine Reihe von pflanzenendogenen Signalstoffen, die in die Stresstoleranz bzw. die Pathogenabwehr involviert sind, sind bereits bekannt. Zu nennen sind hier beispielsweise Salicylsäure, Benzoesäure, Jasmonsäure oder Ethylen (Biochemistry and Molecular Biology of Plants, S. 850-929, American Society of Plant Physiologists, Rockville, Maryland, eds. Buchanan, Gruissem, Jones, 2000). Einige dieser Substanzen oder deren stabile synthetische Derivate und abgeleitete Strukturen sind auch bei externer Applikation auf Pflanzen oder Saatgutbeizung wirksam und aktivieren Abwehrreaktionen, die eine erhöhte Stress- bzw. Pathogentoleranz der Pflanze zur Folge haben (Sembdner, Parthier, Ann. Rev. Plant Physiol. Plant Mol. Biol. 44, 569-589, 1993). Die Salicylatvermittelte Abwehr richtet sich besonders gegen phytopathogene Pilze, Bakterien und Viren (Ryals et al., The Plant Cell 8, 1809-1819, 1996).

Ein bekanntes synthetisches Produkt, das eine der Salicylsäure vergleichbare Funktion übernimmt und eine Schutzwirkung gegen phytopathogene Pilze, Bakterien und Viren vermitteln kann, ist Benzothiadiazol (CGA 245704; Common name: Acibenzolar-S-methyl; Handelsname: Bion®) (Achuo et al., Plant Pathology 53 (1), 65-72, 2004; Tamblyn et al., Pesticide Science 55 (6), 676-677, 1999; EP-OS 0 313 512).

Andere Verbindungen, die in die Gruppe der Oxylipine gehören, wie z.B. Jasmonsäure, und die durch sie ausgelösten Schutzmechanismen sind besonders gegen Schadinsekten wirksam (Walling, J. Plant Growth Regul. 19, 195-216, 2000) .

Desweiteren ist bekannt, dass die Behandlung von Pflanzen mit Insektiziden aus der Reihe der Neonikotinoide (Chlornikotinyle), zu einer erhöhten Resistenz der Pflanze gegenüber abiotischem Stress führt. Insbesondere gilt dies für das Imidacloprid (Brown et al., Beltwide Cotton Conference Proceedings 2231-2237, 2004). Dieser Schutz erfolgt durch Beeinflussung physiologischer und biochemischer Eigenschaften der Pflanzenzellen wie z.B. durch Verbesserung der Membranstabilität, Erhöhung der Kohlenhydratkonzentration, Steigerung der Polyolkonzentration und Antioxidantienaktivität (Gonias et al., Beltwide Cotton Conference Proceedings 2225-2229, 2004).

Darüber hinaus ist der Effekt von Chlornikotinylen gegen biotische Stressfaktoren bekannt (Crop Protection 19 (5), 349-354, 2000; Journal of Entomological Science 37(1), 101-112, 2002; Annals of Biology (Hisar, India) 19 (2), 179-181, 2003). Beispielsweise führen Insektizide aus der Reihe der Neonikotinoide (Chlornikotinyle) zu einer erhöhten Expression von Genen aus der Reihe der "Pathogenesis-related Proteins" (PR-Proteine). PR-Proteine unterstützen die Pflanzen primär in der Abwehr von biotischen Stressoren, wie z.B. phytopathogene Pilze, Bakterien und Viren (DE 10 2005 045 174 A; DE 10 2005 022 994 A und WO 2006/122662 A; Thielert Pflanzenschutz-Nachrichten Bayer, 59 (1), 73-86, 2006; Francis et al., European Journal of Plant Pathology, publ. online 23.1.2009).

Des Weiteren ist bekannt, dass die Behandlung von genetisch modifizierten Pflanzen mit Insektiziden aus der Reihe der Neonikotinoide (Chlornikotinyle) zu einer verbesserten Stresstoleranz der Pflanze führt (EP 1 731 037 A), beispielsweise auch gegenüber dem Herbizid Glyphosat (WO 2006/015697 A).

Somit ist bekannt, dass Pflanzen über mehrere endogene Reaktionsmechanismen verfügen, die eine wirksame Abwehr gegenüber verschiedensten Schadorganismen (biotischer Stress) und/oder abiotischem Stress bewirken können.

Die Anzucht von gesunden und gleichmäßig gewachsenen Jungpflanzen bildet eine wesentliche Voraussetzung für den großflächigen Anbau und die ökonomische Bestandesführung landwirtschaftlicher, gartenbaulicher und forstwirtschaftlicher Kulturpflanzen.

Zahlreiche Jungpflanzen-Anzuchtverfahren sind in der Land- und Forstwirtschaft sowie im Gartenbau etabliert. Hierbei werden als Anzuchtsubstrate neben gedämpfter Erde auch spezielle Substrate u.a. auf Basis von Torfmoosen, Kokosfasern, Steinwolle, wie z.B. Grodan®, Bims, Blähton, wie z.B. Lecaton® oder Lecadan®, Tongranulate, wie z.B. Seramis®, Schaumstoffe, wie z.B. Baystrat®, Vermiculite, Perlite, künstliche Erden, wie z.B. Hygromull®, oder Kombinationen dieser Substrate eingesetzt, in das entweder mit Fungiziden und/oder Insektiziden gebeiztes oder ungebeiztes Saatgut ausgesät wird.

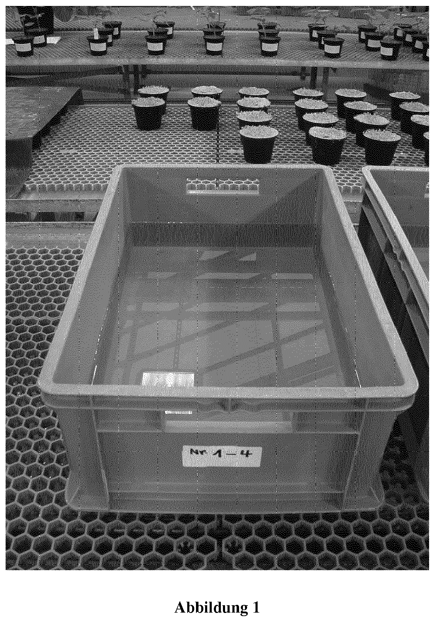

In speziellen Kulturen, wie z.B. Tabak, werden Jungpflanzen zunehmend im sogenannten "Float-Verfahren" oder "Floating-Verfahren" angezogen (Leal, R. S., The use of Confidor S in the float, a new tobacco seedlings production system in the South of Brazil. Pflanzenschutz-Nachrichten Bayer (Deutsche Ausgabe) (2001), 54(3), Seiten 337 bis 352; Rudolph, R. D.; Rogers, W. D.; The efficacy of imidacloprid treatment for reduction in the severity of insect vectored virus diseases of tobacco. Pflanzenschutz-Nachrichten Bayer (Deutsche Ausgabe) (2001), 54(3), Seiten 311 bis 336). Bei diesem Verfahren wird das Saatgut in speziellen Behältern, z.B. Styropor-Lochtabletts, in spezieller Anzuchterde auf Basis Torf-Kultur-Substrat ausgesät und anschließend in Containern mit geeigneter Nährlösung bis zum Erreichen der gewünschten Verpflanzungsgröße kultiviert (Abbildung 1). Dabei gestattet man den Behältern auf der Nährlösung zu treiben, wovon sich der Name der Anzuchtmethode ableitet (Leal, 2001, s.o.). In Floating-Verfahren werden seit einigen Jahren zur Bekämpfung von saugenden Schädlingen Insektizide aus der Klasse der Neonicotiniode (Chlornikotinyle) eingesetzt. Üblicherweise werden die Pflanzen im Float-Verfahren kurz vor dem Verpflanzen mit Neonikotinoid (Chlornikotinyle) Insektiziden besprüht oder unmittelbar vor oder beim Verpflanzen ins Feld mit Neonikotinoid (Chlornikotinyle) Insektiziden angegossen, was als "Drenching" bezeichnet wird (Leal, 2001, s.o.; Rudolph and Rogers, 2001, s.o.). Beide Applikationsverfahren sind technisch relativ aufwendig.

Zum Schutz des auflaufenden Saat- oder Pflanzgutes vor pilzlichen Krankheitserregern und Schädlingen werden hierbei bis zur Verpflanzung Fungizide und Insektizide verwendet. Die Wahl der Pflanzenschutzmittel, der Ort und Zeitpunkt der Anwendung sowie die Aufwandmenge der Mittel richten sich hierbei vor allem nach der Art der auftretenden Pilzkrankheiten und Schädlinge, der spezifischen Wirkungsweise und Wirkungsdauer der Mittel sowie deren Pflanzenverträglichkeit, und kann somit unmittelbar an die spezifischen Erfordernisse unterschiedlicher Kulturen und Regionen angepasst werden.

Sulfoximine sind beispielsweise als Mittel zur Bekämpfung von tierischen Schädlingen, insbesondere Insekten, bekannt geworden (z. B. US-Patentanmeldung 2005/228027 A1, WO 2006/060029 A2, WO 2007/095229 A2, WO 2007/149134 A1, WO 2008/027539 A1, WO 2008/027073 A1 und WO 2008/097235 A1). Desweiteren ist die insektizide Wirkungssteigerung für eine Untergruppe von Sulfoximinen mittels Zugabe von geeigneten Salzen und gegebenenfalls Additiven beschrieben (WO 2007/068355).

Aus dem Stand der Technik ist nicht bekannt, dass Sulfoximine gegen biotische Stressfaktoren und/oder abiotischen Stress von Pflanzen oder im Hinblick auf das Pflanzenwachstum eine Wirkung zeigen.

Es wurde nun gefunden, dass Sulfoximine zur Steigerung der pflanzeneigenen Abwehrkräfte (Pathogenabwehr in Pflanzen) geeignet sind.

Die Sulfoximine führen dabei unabhängig von einer Insektenbekämpfung zu einem guten Schutz der Pflanze vor Schäden durch pilzliche, bakterielle oder virale Pathogene. Ohne an eine Theorie gebunden sein zu wollen wird zurzeit davon ausgegangen, dass die Abwehr der Pathogene durch die Induktion von PR Proteinen als Folge einer Behandlung mit mindestens einem Sulfoximin erfolgt.

Insbesondere zeigt die hierin beschriebene Verwendung in der Saatgutbehandlung, in der Bodenbehandlung, in speziellen Anzucht- und Kultivierungsverfahren (z.B. Floating Box, Rockwool, Hydroponic), aber auch Stamm- und Blattbehandlung die beschriebenen Vorteile. Kombinationen von Sulfoximinen unter anderem mit Insektiziden, Fungiziden und Bakteriziden zeigen synergistische Wirkung bei der Bekämpfung von Pflanzenkrankheiten. Die kombinierte Verwendung von Sulfoximinen mit gentechnisch veränderten Sorten in Bezug auf erhöhte abiotische Stresstoleranz führt darüberhinaus zu einer synergistischen Verbesserung des Wachstums.

Schließlich wurde hierin beschriebenen , dass Sulfoximin (I-8) nicht nur zur Steigerung der Pathogenabwehr in Pflanzen, sondern auch zur Verbesserung des Pflanzenwachstums und/oder zur Steigerung der Widerstandfähigkeit von Pflanzen gegenüber Pflanzenkrankheiten, welche durch Pilze, Bakterien, Viren, MLO (Mycoplasma-like organisms) und/oder RLO (Rickettsia-like organisms) verursacht werden, insbesondere gegenüber bodenbürtigen Pilzkrankheiten, und/oder zur Erhöhung der Widerstandsfähigkeit von Pflanzen gegenüber abiotischen Stressfaktoren geeignet sind.

Zu den abiotischen Stressbedingungen können zum Beispiel Dürre, Kälte- und Hitzebedingungen, osmotischer Stress, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Gegenstand der vorliegenden Erfindung ist somit zunächst die Verwendung von Verbindung (I-8) zur Verbesserung des Pflanzenwachstums und/oder zur Steigerung der Widerstandsfähigkeit von Pflanzen gegenüber abiotischen Stressfaktoren .
- Verbindung (I-8), [6-Trifluormethyl-pyridin-3-yl]ethyl](methyl)oxido-λ⁴-sulfanyliden-cyanamid: 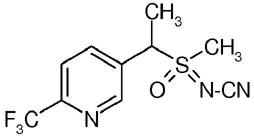 bekannt aus WO 2007/095229 A2 und WO 2007/149134 A1.

Erfindungsgemäß konnte gezeigt werden, dass Sulfoximin (I-8) eine erfindungsgemäße Wirkung auf das Pflanzenwachstum verursachen.

Unter der Bezeichnung Pflanzenwachstum werden im Rahmen der vorliegenden Erfindung verschiedenartige Vorteile für Pflanzen verstanden, die nicht unmittelbar mit der bekannten pestiziden Wirksamkeit, bevorzugt der insektiziden Wirksamkeit der Sulfoximine, insbesondere der Sulfoximine der allgemeinen Formel (I), verbunden sind. Solche vorteilhaften Eigenschaften sind beispielsweise die nachfolgend genannten verbesserten Pflanzencharakteristika: beschleunigte Keimung und Auflaufen des Saat- und Pflanzgutes, verbessertes Wurzelwachstum hinsichtlich Oberfläche und Tiefe, vermehrte Ausläuferbildung oder Bestockung, stärkere und produktivere Ausläufer und Bestockungstriebe, Verbesserung des Sprosswachstums, erhöhte Standfestigkeit, vergrößerter Sprossbasisdurchmesser, vergrößerte Blattfläche, grünere Blattfarbe, höhere Erträge an Nähr- und Inhaltsstoffen, wie z.B. Kohlenhydrate, Fette, Öle, Proteine, Vitamine, Mineralstoffe, ätherische Öle, Farbstoffe, Fasern, bessere Faserqualität, früheres Blühen, gesteigerte Blütenanzahl, reduzierter Gehalt an toxischen Produkten wie Mycotoxine, reduzierter Gehalt an Rückständen oder unvorteilhaften Bestandteilen jeglicher Art oder bessere Verdaulichkeit, verbesserte Lagerstabilität des Erntegutes, verbesserte Toleranz gegenüber unvorteilhaften Temperaturen, verbesserte Toleranz gegenüber Dürre und Trockenheit wie auch Sauerstoffmangel durch Wasserüberschuss, verbesserte Toleranz gegenüber erhöhten Salzgehalten in Böden und Wasser, gesteigerte Toleranz gegenüber UV-Strahlung, gesteigerte Toleranz gegenüber Ozonstress, verbesserte Verträglichkeit gegenüber Herbiziden und anderen Pflanzenbehandlungsmitteln, verbesserte Wasseraufnahme und Photosyntheseleistung, vorteilhafte Pflanzeneigenschaften, wie beispielsweise Beschleunigung der Reifung, gleichmäßigere Abreife, größere Anziehungskraft für Nützlinge, verbesserte Bestäubung oder andere Vorteile, die einem Fachmann durchaus bekannt sind.

Die weiter oben genannten verschiedenartigen Vorteile für Pflanzen lassen sich bekannterweise partiell zusammenfassen und mit allgemein gültigen Begriffen belegen. Soche Begriffe sind beispielsweise die nachfolgend aufgeführten Bezeichnungen: phytotonischer Effekt, Widerstandsfähigkeit gegenüber Stressfaktoren, weniger Pflanzenstress, Pflanzengesundheit, gesunde Pflanzen, Pflanzenfitness ("Plant Fitness"), "Plant Wellness", "Plant Concept", "Vigor Effect", "Stress Shield", Schutzschild, "Crop Health", "Crop Health Properties", "Crop Health Products", "Crop Health Management", "Crop Health Therapy", "Plant Health", "Plant Health Properties", "Plant Health Products", "Plant Health Management", "Plant Health Therapy", Grünungseffekt ("Greening Effect" oder "Re-greening Effect"), "Freshness" oder andere Begriffe, die einem Fachmann durchaus bekannt sind.

Es konnte gezeigt werden, dass Sulfoximin (I-8) einen guten Effekt auf das Pflanzenwachstum aufweisen. Unter dem Begriff eines guten Effekts wird im Rahmen der vorliegenden Erfindung nicht beschränkend
- mindestens ein um im Allgemeinen 5 %, insbesondere 10 %, besonders bevorzugt 15 %, speziell 20 %, verbessertes Auflaufen,
- mindestens einen um im Allgemeinen 5 %, insbesondere 10 %, besonders bevorzugt 15 %, speziell 20 %, gesteigerten Ertrag,
- mindestens eine um im Allgemeinen 5 %, insbesondere 10 %, besonders bevorzugt 15 %, speziell 20 %, verbesserte Wurzelentwicklung,
- mindestens eine um im Allgemeinen 5 %, insbesondere 10 %, besonders bevorzugt 15 %, speziell 20 %, ansteigende Sprossgröße,
- mindestens eine um im Allgemeinen 5 %, insbesondere 10 %, besonders bevorzugt 15 %, speziell 20 %, vergrößerte Blattfläche,
- mindestens eine um im Allgemeinen 5 %, insbesondere 10 %, besonders bevorzugt 15 %, speziell 20 %, verbesserte Keimung,
- mindestens eine um im Allgemeinen 5 %, insbesondere 10 %, besonders bevorzugt 15 %, speziell 20 %, verbesserte Photosyntheseleistung
verstanden, wobei die Effekte einzeln oder aber in beliebiger Kombination von zwei oder mehreren Effekten auftreten können.

Beschrieben ist zudem, dass die Anwendung des Sulfoximins (I-8) in Kombination mit einem Düngemittel wie weiter unten stehend definiert auf Pflanzen oder in deren Umgebung einen synergistischen wachstumssteigernden Effekt bewirkt.

Düngemittel die zusammen mit Sulfoximin (I-8) verwendet werden können sind im Allgemeinen organische und anorganische Stickstoff-haltige Verbindungen wie beispielsweise Harnstoffe, Harnstoff-Formaldehyd-Kondensationsprodukte, Aminosäuren, Ammoniumsalze und -nitrate, Kaliumsalze (bevorzugt Chloride, Sulfate, Nitrate), Phosphorsäuresalze und/oder Salze von Phosphoriger Säure (bevorzugt Kaliumsalze und Ammoniumsalze). Insbesondere zu nennen sind in diesem Zusammenhang die NPK-Dünger, d.h. Düngemittel, die Stickstoff, Phosphor und Kalium enthalten, Kalkammonsalpeter, d.h. Düngemittel, die noch Calcium enthalten, Ammonsulfatsalpeter (Allgemeine Formel (NH₄)₂SO₄ NH₄NO₃), Ammonphosphat und Ammonsulfat. Diese Düngemittel sind dem Fachmann allgemein bekannt, siehe auch beispielsweise Ullmann's Encyclopedia of Industrial Chemistry, 5. Edition, Vol. A 10, Seiten 323 bis 431, Verlagsgesellschaft, Weinheim, 1987.

Die Düngemittel können auch Salze aus Mikronährstoffen (bevorzugt Calcium, Schwefel, Bor, Mangan, Magnesium, Eisen, Bor, Kupfer, Zink, Molybdän und Kobalt) und Phytohormonen (z. B. Vitamin B1 und Indol-3-ylessigsäure (IAA)) oder Gemische davon enthalten. Eingesetzte Düngemittel können auch weitere Salze wie Monoammoniumphosphat (MAP), Diammoniumphosphat (DAP), Kaliumsulfat, Kaliumchlorid oder Magnesiumsulfat enthalten. Geeignete Mengen für die sekundären Nährstoffe oder Spurenelemente sind Mengen von 0,5 bis 5 Gew.-%, bezogen auf das gesamte Düngemittel. Weitere mögliche Inhaltsstoffe sind Pflanzenschutzmittel, Insektizide oder Fungizide, Wachstumsregulatoren oder Gemische davon. Hierzu folgen weiter unten weitergehende Ausführungen.

Die Düngemittel können beispielsweise in Form von Pulvern, Granulaten, Prills oder Kompaktaten eingesetzt werden. Die Düngemittel können jedoch auch in flüssiger Form, gelöst in einem wässrigen Medium, eingesetzt werden. In diesem Fall kann auch verdünnter wässriger Ammoniak als Stickstoffdüngemittel eingesetzt werden. Weitere mögliche Inhaltsstoffe für Düngemittel sind beispielsweise in Ullmann's Encyclopedia of Industrial Chemistry, 5. Auflage, 1987, Band A 10, Seiten 363 bis 401, DE-A 41 28 828, DE-A 19 05 834 und DE-A 196 31 764 beschrieben.

Die allgemeine Zusammensetzung der Düngemittel, bei welchen es sich im Rahmen der vorliegenden Erfindung um Einzelnährstoff- und/oder Mehrnährstoffdünger handeln kann, beispielsweise aus Stickstoff, Kalium oder Phosphor, kann innerhalb eines breiten Bereichs variieren. Im Allgemeinen ist ein Gehalt von 1 bis 30 Gew.-% Stickstoff (bevorzugt 5 bis 20 Gew.-%), von 1 bis 20 Gew.-% Kalium (bevorzugt 3 bis 15 Gew.-%) und ein Gehalt von 1 bis 20 Gew.-% Phosphor (bevorzugt 3 bis 10 Gew.-%) vorteilhaft. Der Gehalt von Mikroelementen ist üblicherweise im ppm Bereich, bevorzugt im Bereich von 1 bis 1000 ppm.

Beschrieben ist, dass das Düngemittel sowie das Sulfoximin (I-8), zeitgleich, d.h. synchron, verabreicht werden. Es ist jedoch auch möglich, zunächst das Düngemittel und dann das Sulfoximin oder zunächst das Sulfoximin und dann das Düngemittel anzuwenden. Bei nicht zeitgleicher Anwendung des Sulfoximins und des Düngemittels erfolgt im Rahmen der vorliegenden Erfindung jedoch die Anwendung in funktionellem Zusammenhang, insbesondere innerhalb eines Zeitraums von im Allgemeinen 24 Stunden, bevorzugt 18 Stunden, besonders bevorzugt 12 Stunden, speziell 6 Stunden, noch spezieller 4 Stunden, noch weiter spezieller innerhalb 2 Stunden. In ganz besonderen Ausführungsformen der vorliegenden Erfindung erfolgt die Anwendung des Wirkstoffes (I-8) und des Düngemittels in einem zeitlichen Rahmen von weniger als 1 Stunde, vorzugsweise weniger als 30 Minuten, besonders bevorzugt weniger als 15 Minuten.

Darüber hinaus ist es möglich, formstabile Mischungen, beispielsweise in der Form von Stäbchen, Granulaten, Tabletten etc., ausgehend von mindestens einem erfindungsgemäß zu verwendenden Wirkstoff und mindestens einem Düngemittel herzustellen. Um eine entsprechende formstabile Mischung herzustellen, können die entsprechenden Bestandteile miteinander gemischt und gegebenenfalls extrudiert werden bzw. kann das Sulfoximin (I-8) auf das Düngemittel aufgezogen werden. Gegebenenfalls können auch Formulierungshilfsmittel in den formstabilen Mischungen, wie beispielsweise Streckmittel oder Haftkleber, verwendet werden, um eine Formstabilität der resultierenden Mischung zu erreichen. Durch die entsprechende Formstabilität eignen sich entsprechende Mischungen insbesondere für die Anwendung im Bereich "Home & Garden", d.h. bei einem Privatanwender oder Hobbygärtner, welche die formstabile Mischung bzw. die darin enthaltenden Bestandteile mit einer vorgegebenen, klar definitierten Menge und ohne besondere Hilfsmittel verwenden können.

Unabhängig hiervon können die Mischungen aus mindestens Sulfoximin (I-8) und dem mindestens einen Düngemittel auch flüssig vorliegen, so dass - beispielsweise bei einem professionallen Anwender im Bereich der Landwirtschaft - die resultierende Mischung als so genannte Tanklösung ausgebracht werden kann.

Durch die Verwendung mindestens von Sulfoximin (I-8) und mindestens einem Düngemittel wird ein vergrössertes Wurzelwachstum ermöglicht, welches wiederum eine höhere Nährstoffaufnahme ermöglicht und damit das Planzenwachstum fördert.

Sulfoximin (I-8) kann, gegebenenfalls in Kombination mit Düngemitteln, bevorzugt an folgenden Pflanzen angewendet werden, wobei die folgende Aufzählung nicht beschränkend ist.

Bevorzugt sind Pflanzen aus der Gruppe der Nutzpflanzen, Zierpflanzen, Rasenarten, allgemein genutzte Bäume, die in öffentlichen und privaten Bereichen als Zierpflanzen Verwendungen finden, und Forstbestand. Der Forstbestand umfasst Bäume für die Herstellung von Holz, Zellstoff, Papier und Produkten die aus Teilen der Bäume hergestellt werden.

Der Begriff Nutzpflanzen, wie hier verwendet, bezeichnet Kulturpflanzen, die als Pflanzen für die Gewinnung von Nahrungsmitteln, Futtermitteln, Treibstoffen oder für technische Zwecke eingesetzt werden.

Zu den Nutzpflanzen, die mit dem erfindungsgemäßen Verfahren verbessert werden können, zählen z. B. folgende Pflanzenarten: Turf, Reben, Getreide, beispielsweise Weizen, Gerste, Roggen, Hafer, Reis, Mais und Hirse; Rüben, beispielsweise Zuckerrüben und Futterrüben; Früchte, beispielsweise Kernobst, Steinobst und Beerenobst, beispielsweise Äpfel, Birnen, Pflaumen, Pfirsiche, Mandeln, Kirschen und Beeren, z. B. Erdbeeren, Himbeeren, Brombeeren; Hülsenfrüchte, beispielsweise Bohnen, Linsen, Erbsen und Sojabohnen; Ölkulturen, beispielsweise Raps, Senf, Mohn, Oliven, Sonnenblumen, Kokos, Castorölpflanzen, Kakaobohnen und Erdnüsse; Gurkengewächse, beispielsweise Kürbis, Gurken und Melonen; Fasergewächse, beispielsweise Baumwolle, Flachs, Hanf und Jute; Citrusfrüchte, beispielsweise Orangen, Zitronen, Pampelmusen und Mandarinen; Gemüsesorten, beispielsweise Spinat, (Kopf)-Salat, Spargel, Kohlarten, Möhren, Zwiebeln, Tomaten, Kartoffeln und Paprika; Lorbeergewächse, beispielsweise Avocado, Cinnamomum, Kampfer, oder ebenso Pflanzen wie Tabak, Nüsse, Kaffee, Aubergine, Zuckerrohr, Tee, Pfeffer, Weinreben, Hopfen, Bananen, Naturkautschukgewächse sowie Zierpflanzen, beispielsweise Blumen, Sträucher, Laubbäume und Nadelbäume wie Koniferen. Diese Aufzählung stellt keine Limitierung dar.

Als besonders geeignete Zielkulturen für die Anwendung des erfindungsgemäßen Verfahrens sind folgende Pflanzen anzusehen: Bamwolle, Aubergine, Turf, Kernobst, Steinobst, Beerenobst, Mais, Weizen, Gerste, Gurke, Tabak, Reben, Reis, Getreide, Birne, Bohnen, Sojabohnen, Raps, Tomate, Paprika, Melonen, Kohl, Kartoffel und Apfel.

Als Bäume, die entsprechend dem erfindungsgemäßen Verfahren verbessert werden können, seien beispielhaft genannt: Abies sp., Eucalyptus sp., Picea sp., Pinus sp., Aesculus sp., Platanus sp., Tilia sp., Acer sp., Tsuga sp., Fraxinus sp., Sorbus sp., Betula sp., Crataegus sp., Ulmus sp., Quercus sp., Fagus sp., Salix sp., Populus sp..

Als bevorzugte Bäume, die entsprechend dem erfindungsgemäßen Verfahren verbessert werden können, können genannt werden: Aus der Baumart Aesculus: A. hippocastanum, A. pariflora, A. carnea; aus der Baumart Platanus: P. aceriflora, P. occidentalis, P. racemosa; aus der Baumart Picea: P. abies; aus der Baumart Pinus: P. radiate, P. ponderosa, P. contorta, P. sylvestre, P. elliottii, P. montecola, P. albicaulis, P. resinosa, P. palustris, P. taeda, P. flexilis, P. jeffregi, P. baksiana, P. strobes; aus der Baumart Eucalyptus: E. grandis, E. globulus, E. camadentis, E. nitens, E. obliqua, E. regnans, E. pilularus.

Als besonders bevorzugte Bäume, die entsprechend dem erfindungsgemäßen Verfahren verbessert werden können, können genannt werden: Aus der Baumart Pinus: P. radiate, P. ponderosa, P. contorta, P. sylvestre, P. strobes; aus der Baumart Eucalyptus: E. grandis, E. globulus, E. camadentis.

Als ganz besonders bevorzugte Bäume, die entsprechend dem erfindungsgemäßen Verfahren verbessert werden können, können genannt werden: Rosskastanie, Platanengewächse, Linde, Ahornbaum.

Die vorliegende Erfindung kann auch an beliebigen Rasenarten ("turfgrasses") durchgeführt werden, einschließlich "cool season turfgrasses" und "warm season turfgrasses". Beispiele für Rasenarten für die kalte Jahreszeit sind Blaugräser ("blue grasses"; *Poa spp*.), wie "Kentucky bluegrass" (*Poa pratensis* L.), "rough bluegrass" *(Poa trivialis* L.), "Canada bluegrass" *(Poa compressa* L.), "annual bluegrass" *(Poa annua* L.), "upland bluegrass" (Poa *glaucantha Gaudin),* "wood bluegrass" *(Poa nemoralis* L.) und "bulbous bluegrass" *(Poa bulbosa* L.); Straussgräser ("Bentgrass", *Agrostis spp*.), wie "creeping bentgrass" *(Agrostis palustris* Huds.), "colonial bentgrass" *(Agrostis tenuis* Sibth.), "velvet bentgrass" *(Agrostis canina* L.), "South German Mixed Bentgrass" *(Agrostis spp.* einschließlich *Agrostis tenius* Sibth., *Agrostis canina* L., und *Agrostis palustris* Huds.), und "redtop" *(Agrostis alba* L.);
Schwingel ("Fescues", *Festucu spp*.), wie "red fescue" *(Festuca rubra* L. spp. *rubra*), "creeping fescue" *(Festuca rubra* L.), "chewings fescue" (*Festuca rubra commutata* Gaud.), "sheep fescue" *(Festuca ovina* L.), "hard fescue" *(Festuca longifolia* Thuill.), "hair fescue" *(Festucu capillata* Lam.), "tall fescue" *(Festuca arundinacea* Schreb.) und "meadow fescue" *(Festuca elanor* L.);
Lolch ("ryegrasses", *Lolium* spp.), wie "annual ryegrass" (*Lolium multiflorum* Lam.), "perennial ryegrass" *(Lolium perenne* L.) und "italian ryegrass" *(Lolium multiflorum* Lam.);
und Weizengräser ("wheatgrasses", *Agropyron* spp..), wie "fairway wheatgrass" *(Agropyron cristatum* (L.) Gaertn.), "crested wheatgrass" (*Agropyron desertorum* (Fisch.) Schult.) und "western wheatgrass" *(Agropyron smithii* Rydb.).

Beispiele für weitere "cool season turfgrasses" sind "beachgrass" *(Ammophila breviligulata* Fern.), "smooth bromegrass" *(Bromus inermis* Leyss.), Schilf ("cattails") wie "Timothy" *(Phleum pratense* L.), "sand cattail" (*Phleum subulatum* L.), "orchardgrass" *(Dactylis glomerata* L.), "weeping alkaligrass" (*Puccinellia distans* (L.) Parl.) und "crested dog's-tail" *(Cynosurus cristatus* L.).

Beispiele für "warm season turfgrasses" sind "Bermudagrass" (*Cynodon spp.* L. C. Rich), "zoysiagrass" *(Zoysia spp.* Willd.), "St. Augustine grass" (*Stenotaphrum secundatum* Walt Kuntze), "centipedegrass" *(Eremochloa ophiuroides* Munro Hack.), "carpetgrass" *(Axonopus affinis* Chase), "Bahia grass" *(Paspalum notatum* Flügge), "Kikuyugrass" *(Pennisetum clandestinum* Hochst. ex Chiov.), "buffalo grass" *(Buchloe dactyloids* (Nutt.) Engelm.), "Blue gramma" *(Bouteloua gracilis* (H.B.K.) Lag. ex Griffiths), "seashore paspalum" *(Paspalum vaginatum* Swartz) und "sideoats grama" *(Bouteloua curtipendula* (Michx. Torr.). "Cool season turfgrasses" sind für die erfindungsgemäße Verwendung im Allgemeinen bevorzugt. Besonders bevorzugt sind Blaugras, Straussgras und "redtop", Schwingel und Lolch. Straussgras ist insbesondere bevorzugt.

Es wird ferner beschrieben, dass Sulfoximine der allgemeinen Formel (I) 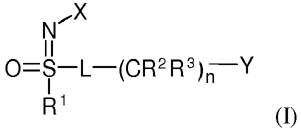 in welcher
- X: für NO₂, CN oder COOR⁴ steht,

- L: für eine Einfachbindung steht,
- R¹: für C₁-C₄-Alkyl steht, oder
R¹, Schwefel und L zusammen für einen 4-, 5- oder 6-gliedrigen Ring stehen,
- R² und R³: unabhängig voneinander für Wasserstoff, Methyl, Ethyl, Fluor, Chlor oder Brom stehen, oder
- R² und R³: gemeinsam für -(CH₂)₂-, -(CH₂)₃-, -(CH₂)₄- oder -(CH₂)₅- stehen und mit dem Kohlenstoffatom an dem sie gebunden sind einen 3-, 4-, 5- oder 6-Ring bilden,
- n: für 0, 1, 2 oder 3 steht,
- Y: für einen der Reste 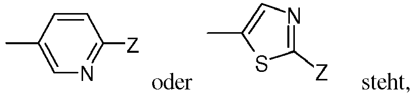
worin
- Z: für Halogen, C₁-C₄-Alkyl, C₁-C₄-Halogenalkyl, C₁-C₄-Alkoxy oder C₁-C₄-Halogenalkoxy steht und
- R⁴: für C₁-C₃-Alkyl steht,
zu einer erhöhten Expression von Genen aus der Reihe der "Pathogenesis-related proteins" (PR-Proteine) führen. PR-Proteine unterstützen die Pflanzen primär in der Abwehr von biotischen Stressoren, wie z.B. phytopathogene Pilze, Bakterien und Viren. Dies hat zur Folge, dass Pflanzen nach Anwendung von Sulfoximinen, insbesondere von Sulfoximinen der allgemeinen Formel (I), besser geschützt sind vor Infektionen phytopathogener Pilze, Bakterien und Viren. Bei notwendigem Einsatz von Insektiziden, Fungiziden und Bakteriziden in Mischung wie auch bei sequentieller Anwendung mit Sulfoximinen, insbesondere mit Sulfoximinen der allgemeinen Formel (I), wird deren Wirkung unterstützt.

Die Wirkstoffe können in die üblichen Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsysulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Als Trägerstoffe kommen in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweisshydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder-Zucker-Addukte, Alkyl- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabilische gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel.

Die Formulierungen enthalten im allgemeinen zwischen 0,01 und 98 Gew.-% Wirkstoff, vorzugsweise zwischen 0,5 und 90 %.

Der erfindungsgemäße Wirkstoff (I-8) kann in seinen handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals vorliegen.

Beschrieben wird ferner die Verwendung von Sulfoximinen, insbesondere von Sulfoximinen der allgemeinen Formel (I), um Pflanzen gegenüber Pflanzenkrankheiten, welche durch Pilze, Bakterien, Viren, MLO (Mycoplasma-like organisms) und/oder RLO (Rickettsia-like organisms) verursacht werden, zu schützen. Die Sulfoximine führen unabhängig von einer Insektenbekämpfung zu einem guten Schutz der Pflanze vor Schäden durch pilzliche, bakterielle oder virale Pathogene.

Vorteile gegenüber anderen möglichen Verfahren sind die geringen Aufwandmengen, um diesen Schutz zu erreichen und die hohe Pflanzenverträglichkeit der Sulfoximine der allgemeinen Formel (I). Außerdem kann mit einem Wirkstoff ein Schutz gegen eine Vielzahl von Pathogenen erreicht werden.

Um einen Schutz vor Pathogenen zu erhalten, insbesondere gegen Pflanzenkrankheiten, welche durch Pilze, Bakterien, Viren, MLO (Mycoplasma-like organisms) und/oder RLO (Rickettsia-like organisms) verursacht werden, können die Pflanzen mit Einzelwirkstoffen oder mit Kombinationen von Sulfoximinen der allgemeinen Formel (I) behandelt werden.

Ferner lässt sich die beschriebene positive Wirkung der Sulfoximine auf die pflanzeneigenen Abwehrkräfte durch eine zusätzliche Behandlung mit insektziden, fungiziden oder bakteriziden Wirkstoffen unterstützen.

In einer bevorzugten Ausführungsform erfolgt dieser Schutz durch die Induktion von PR-Proteinen als Folge der Behandlung mit Sulfoximinen der allgemeinen Formel (I).

Bevorzugte Sulfoximine der allgemeinen Formel (I) sind:
(I-1), [6-Chlor-pyridin-3-yl]methyl](methyl)oxido-λ⁴-sulfanyliden-cyanamid
(I-2), [6-Trifluormethyl-pyridin-3-yl]methyl](methyl)oxido-λ⁴-sulfanyliden-cyanamid
(I-3), Methyl(oxido){[2-chlor-1,3-thiazol-5-yl]methyl}λ⁴-sulfanyliden-cyanamid
(I-4), Methyl(oxido){[2-(trifluormethyl)-1,3-thiazol-5-yl]methyl}λ⁴-sulfanyliden-cyanamid
(I-5), [6-Chlor-pyridin-3-yl]ethyl](methyl)oxido-λ⁴-sulfanyliden-cyanamid
(I-6), [6-Chlor-pyridin-3-yl]ethyl](methyl)oxido-λ⁴-sulfanyliden-cyanamid Diastereomer
(I-7), [6-Chlor-pyridin-3-yl]ethyl](methyl)oxido-λ⁴-sulfanyliden-cyanamid Diastereomer
(I-8), [6-Trifluormethyl-pyridin-3-yl]ethyl](methyl)oxido-λ⁴-sulfanyliden-cyanamid
(I-9), [6-(1,1-Difluorethyl)pyrid-3-yl]ethyl](methyl)oxido-λ⁴-sulfanyliden-cyanamid
(I-10), [6-Difluormethyl-pyrid-3-yl]ethyl](methyl)oxido-λ⁴-sulfanyliden-cyanamid
(I-11), Methyl(oxido){1-[2-(trichlormethyl)-pyrid-3-yl]ethyl}λ⁴-sulfanyliden-cyanamid
(I-12), Methyl(oxido){1-[2-(pentafluorethyl)-pyrid-3-yl]ethyl}λ⁴-sulfanyliden-cyanamid
(I-13), [6-Chlordifluormethyl-pyrid-3-yl]ethyl](methyl)oxido-λ⁴-sulfanyliden-cyanamid
(I-14), Methyl(oxido){1-[2-(trifluormethyl)-1,3-thiazol-5-yl]ethyl}λ⁴-sulfanyliden-cyanamid
(I-15), Methyl(oxido){1-[6-(trifluormethyl)pyridin-3-yl]cyclopropyl-λ⁴-sulfanyliden-cyanamid
(I-16), Methyl(oxido){1-(6-chlorpyridin-3-yl)cyclopropyl-λ⁴-sulfanyliden-cyanamid
(I-17), 2-(6-Chlorpyridin-3-yl)-1-oxido-tetrahydro-1*H*-1λ⁴-thien-yliden-cyanamid
(I-18), 2-(6-Trifluormethylpyridin-3-yl)-1-oxido-tetrahydro-1*H*-1λ⁴-thien-yliden-cyanamid
(I-19), 1-Oxo-2-(2-trifluormethyl-1,3-thiazol-5-ylmethyl)-tetrahydro-1-λ⁶-thiophen-1-yliden-cyanamid
(I-20), 1-Oxo-2-(6-trifluormethyl-pyrid-3-ylmethyl)-tetrahydro-1-λ⁶-thiophen-1-yliden-cyanamid
(I-21), 1-Oxo-2-(6-chlor-pyrid-3-ylmethyl)-tetrahydro-1-λ⁶-thiophen-1-yliden-cyanamid
(I-22), 1-Oxo-2-(6-chlor-pyrid-3-ylmethyl)-tetrahydro-1-λ⁶-thiophen-1-yliden-cyanamid Diastereomer
(I-23), 1-Oxo-2-(6-chlor-pyrid-3-ylmethyl)-tetrahydro-1-λ⁶-thiophen-1-yliden-cyanamid Diastereomer

Besonders bevorzugte Sulfoximine der allgemeinen Formel (I) sind:
(I-1), [6-Chlor-pyridin-3-yl]methyl](methyl)oxido-λ⁴-sulfanyliden-cyanamid,
(I-2), [6-Trifluormethyl-pyridin-3-yl]methyl](methyl)oxido-λ⁴-sulfanyliden-cyanamid,
(I-3), Methyl(oxido){[2-chlor-1,3-thiazol-5-yl]methyl}λ⁴-sulfanyliden-cyanamid,
(I-4), Methyl(oxido){[2-(trifluormethyl)-1,3-thiazol-5-yl]methyl}λ⁴-sulfanyliden-cyanamid,
(I-5), [6-Chlor-pyridin-3-yl]ethyl](methyl)oxido-λ⁴-sulfanyliden-cyanamid,
(I-6), [6-Chlor-pyridin-3-yl]ethyl](methyl)oxido-λ⁴-sulfanyliden-cyanamid Diastereomer,
(I-7), [6-Chlor-pyridin-3-yl]ethyl](methyl)oxido-λ⁴-sulfanyliden-cyanamid Diastereomer,
(I-8), [6-Trifluormethyl-pyridin-3-yl]ethyl](methyl)oxido-λ⁴-sulfanyliden-cyanamid,
(I-14), Methyl(oxido){1-[2-(trifluormethyl)-1,3-thiazol-5-yl]ethyl} λ⁴-sulfanyliden-cyanamid,
(I-15), Methyl(oxido){1-[6-(trifluormethyl)pyridin-3-yl]cyclopropyl-λ⁴-sulfanyliden-cyanamid,
(I-16), Methyl(oxido){1-(6-chlorpyridin-3-yl)cyclopropyl-λ⁴-sulfanyliden-cyanamid.

Ganz besonders bevorzugte Sulfoximine der Formel (I) sind:
(I-5), [6-Chlor-pyridin-3-yl]ethyl](methyl)oxido-λ⁴-sulfanyliden-cyanamid,
(I-6), [6-Chlor-pyridin-3-yl]ethyl](methyl)oxido-λ⁴-sulfanyliden-cyanamid Diastereomer,
(I-7), [6-Chlor-pyridin-3-yl]ethyl](methyl)oxido-λ⁴-sulfanyliden-cyanamid Diastereomer,
(I-8), [6-Trifluormethyl-pyridin-3-yl]ethyl](methyl)oxido-λ⁴-sulfanyliden-cyanamid,
(I-15), Methyl(oxido){1-[6-(trifluormethyl)pyridin-3-yl]cyclopropyl-λ⁴-sulfanyliden-cyanamid,
(I-16), Methyl(oxido){1-(6-chlorpyridin-3-yl)cyclopropyl-λ⁴-sulfanyliden-cyanamid.

Besonders bevorzugt werden Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder mit Hilfe rekombinanter DNA-Techniken, gezüchtet worden sind. Kulturpflanzen können demnach Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten.

Das Behandlungsverfahren kann somit auch für die Behandlung von genetisch modifizierten Organismen (GMOs), z. B. Pflanzen oder Samen, verwendet werden. Genetisch modifizierte Pflanzen (oder transgene Pflanzen) sind Pflanzen, bei denen ein heterologes Gen stabil in das Genom integriert worden ist. Der Begriff "heterologes Gen" bedeutet im wesentlichen ein Gen, das außerhalb der Pflanze bereitgestellt oder assembliert wird und das bei Einführung in das Zellkerngenom, das Chloroplastengenom oder das Mitochondriengenom der transformierten Pflanze dadurch neue oder verbesserte agronomische oder sonstige Eigenschaften verleiht, dass es ein interessierendes Protein oder Polypeptid exprimiert oder dass es ein anderes Gen, das in der Pflanze vorliegt bzw. andere Gene, die in der Pflanze vorliegen, herunterreguliert oder abschaltet (zum Beispiel mittels Antisense-Technologie, Cosuppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

Zu Pflanzen und Pflanzensorten, die vorzugsweise behandelt werden, zählen alle Pflanzen, die über Erbgut verfügen, das diesen Pflanzen besonders vorteilhafte, nützliche Merkmale verleiht (unabhängig davon, ob dies durch Züchtung und/oder Biotechnologie erzielt wurde).

Pflanzen und Pflanzensorten, die ebenfalls vorzugsweise behandelt werden, sind gegen einen oder mehrere biotische Stressfaktoren resistent, d. h. diese Pflanzen weisen eine verbesserte Abwehr gegen tierische und mikrobielle Schädlinge wie Nematoden, Insekten, Milben, phytopathogene Pilze, Bakterien, Viren und/oder Viroide auf.

Pflanzen und Pflanzensorten, die ebenfalls behandelt werden können, sind solche Pflanzen, die gegen einen oder mehrere abiotische Stressfaktoren resistent sind. Zu den abiotischen Stressbedingungen können zum Beispiel Dürre, Kälte- und Hitzebedingungen, osmotischer Stress, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Stress- und nicht-Stress-Bedingungen) beeinflusst werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengrö-ße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Pflanzen, die behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Stressfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen (d. h. mechanischem Entfernen der männlichen Geschlechtsorgane bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, das man von den Hybridpflanzen ernten will, um die Samen handelt, ist es üblicherweise günstig, sicherzustellen, dass die Pollenfertilität in Hybridpflanzen, die die für die Pollensterilität verantwortlichen genetischen Determinanten enthalten, völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 1992/005251, WO 1995/009910, WO 1998/27806, WO 2005/002324, WO 2006/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 1991/002069).

Pflanzen oder Pflanzensorten (die mit Methoden der Pflanzenbiotechnologie, wie der Gentechnik, erhalten werden), die behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidtolerante Pflanzen sind zum Beispiel glyphosatetolerante Pflanzen, d. h. Pflanzen, die gegenüber dem Herbizid Glyphosate oder dessen Salzen tolerant gemacht worden sind. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium *Salmonella typhimurium* (Comai et al., Science (1983), 221, 370-371), das CP4-Gen des Bakteriums *Agrobacterium sp.* (Barry et al., Curr. Topics Plant Physiol. (1992), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 2001/66704) kodieren. Es kann sich auch um eine mutierte EPSPS handeln, wie sie zum Beispiel in EP-A 0837944, WO 2000/066746, WO 2000/066747 oder WO 2002/026995 beschrieben ist. Glyphosatetolerante Pflanzen können auch dadurch erhalten werden, dass man ein Gen exprimiert, das für ein Glyphosate-Oxidoreduktase-Enzym, wie es in US 5,776,760 und US 5,463,175 beschrieben ist, kodiert. Glyphosatetolerante Pflanzen können auch dadurch erhalten werden, dass man ein Gen exprimiert, das für ein Glyphosate-acetyltransferase-Enzym, wie es in z. B. WO 2002/036782, WO 2003/092360, WO 2005/012515 und WO 2007/024782 beschrieben ist, kodiert. Glyphosatetolerante Pflanzen können auch dadurch erhalten werden, dass man Pflanzen, die natürlich vorkommende Mutationen der oben erwähnten Gene, wie sie zum Beispiel in WO 2001/024615 oder WO 2003/013226 beschrieben sind, enthalten, selektiert.

Sonstige herbizidresistente Pflanzen sind zum Beispiel Pflanzen, die gegenüber Herbiziden, die das Enzym Glutaminsynthase hemmen, wie Bialaphos, Phosphinotricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet. Solch ein wirksames entgiftendes Enzym ist zum Beispiel ein Enzym, das für ein Phosphinotricin-acetyltransferase kodiert (wie zum Beispiel das bar- oder pat-Protein aus Streptomyces-Arten). Pflanzen, die eine exogene Phosphinotricin-acetyltransferase exprimieren, sind zum Beispiel in US 5,561,236; US 5,648,477; US 5,646,024; US 5,273,894; US 5,637,489; US 5,276,268; US 5,739,082; US 5,908,810 und US 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei den Hydroxyphenylpyruvatdioxygenasen handelt es sich um Enzyme, die die Reaktion, in der para-Hydroxyphenylpyruvat (HPP) zu Homogentisat umgesetzt wird, katalysieren. Pflanzen, die gegenüber HPPD-Hemmern tolerant sind, können mit einem Gen, das für ein natürlich vorkommendes resistentes HPPD-Enzym kodiert, oder einem Gen, das für ein mutiertes HPPD-Enzym gemäß WO 1996/038567, WO 1999/024585 und WO 1999/024586 kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 1999/034008 und WO 2002/36787 beschrieben. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Prephenatdehydrogenase-Enzym kodiert, wie dies in WO 2004/024928 beschrieben ist.

Weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in US 5,605,011, US 5,378,824, US 5,141,870 und US 5,013,659, beschrieben ist. Die Herstellung von sulfonylharnstofftoleranten Pflanzen und imidazolinontoleranten Pflanzen ist in US 5,605,011; US 5,013,659; US 5,141,870; US 5,767,361; US 5,731,180; US 5,304,732; US 4,761,373; US 5,331,107; US 5,928,937; und US 5,378,824; sowie in der internationalen Veröffentlichung WO 1996/033270 beschrieben. Weitere imidazolinontolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere sulfonylharnstoff- und imidazolinontolerante Pflanzen sind auch in z.B. WO 2007/024782 beschrieben.

Weitere Pflanzen, die gegenüber Imidazolinon und/oder Sulfonylharnstoff tolerant sind, können durch induzierte Mutagenese, Selektion in Zellkulturen in Gegenwart des Herbizids oder durch Mutationszüchtung erhalten werden, wie dies zum Beispiel für die Sojabohne in US 5,084,082, für Reis in WO 1997/41218, für die Zuckerrübe in US 5,773,702 und WO 1999/057965, für Salat in US 5,198,599 oder für die Sonnenblume in WO 2001/065922 beschrieben ist.

Pflanzen oder Pflanzensorten (die nach Methoden der pflanzlichen Biotechnologie, wie der Gentechnik, erhalten wurden), die ebenfalls behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfasst im vorliegenden Zusammenhang jegliche Pflanze, die mindestens ein Transgen enthält, das eine Kodiersequenz umfasst, die für folgendes kodiert:
1) ein insektizides Kristallprotein aus *Bacillus thuringiensis* oder einen insektiziden Teil davon, wie die insektiziden Kristallproteine, die von Crickmore et al., Microbiology and Molecular Biology Reviews (1998), 62, 807-813, von Crickmore et al. (2005) in der Bacillus thuringiensis-Toxinnomenklatur aktualisiert, online bei:
   http://www.lifesci.sussex.ac.uk/Home/Neil_Crickmore/Bt/), zusammengestellt wurden, oder insektizide Teile davon, z.B. Proteine der Cry-Proteinklassen Cry1Ab, Cry1Ac, Cry1F, Cry2Ab, Cry3Ae oder Cry3Bb oder insektizide Teile davon; oder
2) ein Kristallprotein aus Bacillus thuringiensis oder einen Teil davon, der in Gegenwart eines zweiten, anderen Kristallproteins als Bacillus thuringiensis oder eines Teils davon insektizid wirkt, wie das binäre Toxin, das aus den Kristallproteinen Cy34 und Cy35 besteht (Moellenbeck et al., Nat. Biotechnol. (2001), 19, 668-72; Schnepf et al., Applied Environm. Microb. (2006), 71, 1765-1774); oder
3) ein insektizides Hybridprotein, das Teile von zwei unterschiedlichen insektiziden Kristallproteinen aus Bacillus thuringiensis umfasst, wie zum Beispiel ein Hybrid aus den Proteinen von 1) oben oder ein Hybrid aus den Proteinen von 2) oben, z. B. das Protein Cry1A.105, das von dem Mais-Event MON98034 produziert wird (WO 2007/027777); oder
4) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden, wie das Protein Cry3Bb1 in Mais-Events MON863 oder MON88017 oder das Protein Cry3A im Mais-Event MIR 604; oder
5) ein insektizides sezerniertes Protein aus Bacillus thuringiensis oder Bacillus cereus oder einen insektiziden Teil davon, wie die vegetativ wirkenden insektentoxischen Proteine (vegetative insekticidal proteins, VIP), die unter http://www.lifesci.sussex.ac.uk/Home/Neil_Crickmore/Bt/vip.html angeführt sind, z. B. Proteine der Proteinklasse VIP3Aa; oder
6) ein sezerniertes Protein aus Bacillus thuringiensis oder Bacillus cereus, das in Gegenwart eines zweiten sezernierten Proteins aus Bacillus thuringiensis oder B. cereus insektizid wirkt, wie das binäre Toxin, das aus den Proteinen VIP1A und VIP2A besteht (WO 1994/21795); oder
7) ein insektizides Hybridprotein, das Teile von verschiedenen sezernierten Proteinen von Bacillus thuringiensis oder Bacillus cereus umfasst, wie ein Hybrid der Proteine von 1) oder ein Hybrid der Proteine von 2) oben; oder
8) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden (wobei die Kodierung für ein insektizides Protein erhalten bleibt), wie das Protein VIP3Aa im Baumwoll-Event COT 102.

Natürlich zählt zu den insektenresistenten transgenen Pflanzen im vorliegenden Zusammenhang auch jegliche Pflanze, die eine Kombination von Genen umfasst, die für die Proteine von einer der oben genannten Klassen 1 bis 8 kodieren. In einer Ausführungsform enthält eine insektenresistente Pflanze mehr als ein Transgen, das für ein Protein nach einer der oben genannten 1 bis 8 kodiert, um das Spektrum der entsprechenden Zielinsektenarten zu erweitern oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Pflanzen oder Pflanzensorten (die nach Methoden der pflanzlichen Biotechnologie, wie der Gentechnik, erhalten wurden), die ebenfalls behandelt werden können, sind gegenüber abiotischen Stressfaktoren tolerant. Solche Pflanzen können durch genetische Transformation oder durch Selektion von Pflanzen, die eine Mutation enthalten, die solch eine Stressresistenz verleiht, erhalten werden. Zu besonders nützlichen Pflanzen mit Stresstoleranz zählen folgende:
a. Pflanzen, die ein Transgen enthalten, das die Expression und/oder Aktivität des Gens für die Poly(ADP-ribose)polymerase (PARP) in den Pflanzenzellen oder Pflanzen zu reduzieren vermag, wie dies in WO 2000/004173 oder EP 04077984.5 oder EP 06009836.5 beschrieben ist.
b. Pflanzen, die ein stresstoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;
c. Pflanzen, die ein stresstoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotidadenyltransferase, Nicotinamidadenindinukleotidsynthetase oder Nicotinamidphosphoribosyltransferase, wie dies z. B. in EP 04077624.7 oder WO 2006/133827 oder PCT/EP07/002433 beschrieben ist.

Pflanzen oder Pflanzensorten (die nach Methoden der pflanzlichen Biotechnologie, wie der Gentechnik, erhalten wurden), die ebenfalls behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:
1) Transgene Pflanzen, die eine modifizierte Stärke synthetisieren, die bezüglich ihrer chemischphysikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekorngröße und/oder Stärkekornmorphologie im Vergleich mit der synthetisierten Stärke in Wildtyppflanzenzellen oder -pflanzen verändert ist, so dass sich diese modifizierte Stärke besser für bestimmte Anwendungen eignet. Diese transgenen Pflanzen, die eine modifizierte Stärke synthetisieren, sind zum Beispiel in EP 0571427, WO 1995/004826, EP 0719338, WO 1996/15248, WO 1996/19581, WO 1996/27674, WO 1997/11188, WO 1997/26362, WO 1997/32985, WO 1997/42328, WO 1997/44472, WO 1997/45545, WO 1998/27212, WO 1998/40503, WO 99/58688, WO 1999/58690, WO 1999/58654, WO 2000/008184, WO 2000/008185, WO 2000/28052, WO 2000/77229, WO 2001/12782, WO 2001/12826, WO 2002/101059, WO 2003/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 2000/22140, WO 2006/063862, WO 2006/072603, WO 2002/034923, EP 06090134.5, EP 06090228.5, EP 06090227.7, EP 07090007.1, EP 07090009.7, WO 2001/14569, WO 2002/79410, WO 2003/33540, WO 2004/078983, WO 2001/19975, WO 1995/26407, WO 1996/34968, WO 1998/20145, WO 1999/12950, WO 1999/66050, WO 1999/53072, US 6,734,341, WO 2000/11192, WO 1998/22604, WO 1998/32326, WO 2001/98509, WO 2001/98509, WO 2005/002359, US 5,824,790, US 6,013,861, WO 1994/004693, WO 1994/009144, WO 1994/11520, WO 1995/35026 bzw. WO 1997/20936 beschrieben.
2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP 0663956, WO 1996/001904, Wo 1996/021023, WO 1998/039460 und WO 1999/024593 beschrieben ist, Pflanzen, die alpha-1,4-Glucane produzieren, wie dies in WO 1995/031553, US 2002/031826, US 6,284,479, US 5,712,107, WO 1997/047806, WO 1997/047807, WO 1997/047808 und WO 2000/14249 beschrieben ist, Pflanzen, die alpha-1,6-verzweigte alpha-1,4-Glucane produzieren, wie dies in WO 2000/73422 beschrieben ist, und Pflanzen, die Alternan produzieren, wie dies in WO 2000/047727, EP 06077301.7, US 5,908,975 und EP 0728213 beschrieben ist.
3) Transgene Pflanzen, die Hyaluronan produzieren, wie dies zum Beispiel in WO 2006/032538, WO 2007/039314, WO 2007/039315, WO 2007/039316, JP 2006/304779 und WO 2005/012529 beschrieben ist.

Pflanzen oder Pflanzensorten (die nach Methoden der pflanzlichen Biotechnologie, wie der Gentechnik, erhalten wurden), die ebenfalls behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:
a) Pflanzen wie Baumwollpflanzen, die eine veränderte Form von Cellulosesynthasegenen enthalten, wie dies in WO 1998/000549 beschrieben ist,
b) Pflanzen wie Baumwollpflanzen, die eine veränderte Form von rsw2- oder rsw3-homologen Nukleinsäuren enthalten, wie dies in WO 2004/053219 beschrieben ist;
c) Pflanzen wie Baumwollpflanzen mit einer erhöhten Expression der Saccharosephosphatsynthase, wie dies in WO 2001/017333 beschrieben ist;
d) Pflanzen wie Baumwollpflanzen mit einer erhöhten Expression der Saccharosesynthase, wie dies in WO 02/45485 beschrieben ist;
e) Pflanzen wie Baumwollpflanzen bei denen der Zeitpunkt der Durchlasssteuerung der Plasmodesmen an der Basis der Faserzelle verändert ist, z. B. durch Herunterregulieren der faserselektiven β-1,3-Glucanase, wie dies in WO 2005/017157 beschrieben ist;
f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls behandelt werden können, sind Pflanzen wie Raps oder verwandte Brassica-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften verleiht, erhalten werden; dazu zählen:
a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;
b) Pflanzen wie Rapspflanzen, die Öl mit einem niedrigen Linolensäuregehalt produzieren, wie dies in US 6,270828, US 6,169,190 oder US 5,965,755 beschrieben ist.
c) Pflanzen wie Rapspflanzen, die Öl mit einem niedrigen gesättigten Fettsäuregehalt produzieren, wie dies z. B. in US 5,434,283 beschrieben ist.

Besonders nützliche transgene Pflanzen, die behandelt werden können, sind Pflanzen mit einem oder mehreren Genen, die für ein oder mehrere Toxine kodieren, sind die transgenen Pflanzen, die unter den folgenden Handelsbezeichnungen angeboten werden: YIELD GARD® (zum Beispiel Mais, Baumwolle, Sojabohnen), KnockOut® (zum Beispiel Mais), BiteGard® (zum Beispiel Mais), BT-Xtra® (zum Beispiel Mais), StarLink® (zum Beispiel Mais), Bollgard® (Baumwolle), Nucotn® (Baumwolle), Nucotn 33B® (Baumwolle), NatureGard® (zum Beispiel Mais), Protecta® und NewLeaf® (Kartoffel). Herbizidtolerante Pflanzen, die zu erwähnen sind, sind zum Beispiel Maissorten, Baumwollsorten und Sojabohnensorten, die unter den folgenden Handelsbezeichnungen angeboten werden: Roundup Ready® (Glyphosatetoleranz, zum Beispiel Mais, Baumwolle, Sojabohne), Liberty Link® (Phosphinotricintoleranz, zum Beispiel Raps), IMI® (Imidazolinontoleranz) und SCS® (Sylfonylharnstofftoleranz), zum Beispiel Mais. Zu den herbizidresistenten Pflanzen (traditionell auf Herbizidtoleranz gezüchtete Pflanzen), die zu erwähnen sind, zählen die unter der Bezeichnung Clearfield® angebotenen Sorten (zum Beispiel Mais).

Besonders nützliche transgene Pflanzen, die behandelt werden können, sind Pflanzen, die Transformations-Events, oder eine Kombination von Transformations-Events, enthalten und die zum Beispiel in den Dateien von verschiedenen nationalen oder regionalen Behörden angeführt sind (siehe zum Beispiel http://gmoinfo.jrc.it/gmp_browse.aspx und http://www.agbios.com/dbase.php).

Beschrieben ist zudem eine entsprechende Nährlösungen, insbesondere zur Anzucht von Pflanzen und/oder keimenden Pflanzen, enthaltend eine zur Steigerung von pflanzeneigenen Abwehrkräfte und/oder zur Verbesserung des Pflanzenwachstums und/oder zur Erhöhung der Widerstandsfähigkeit von Pflanzen gegenüber Pflanzenkrankheiten, welche durch Pilze, Bakterien, Viren, MLO (Mycoplasma-like organisms) und/oder RLO (Rickettsia-like organisms) verursacht werden, wirksame Menge von mindestens einem Sulfoximin, insbesondere einem Sulfoximin der allgemeinen Formel (I). Die Nährlösungen weisen dabei vorzugsweise einen Gehalt an dem mindestens einen Sulfoximin von 0,0005 bis 0,025 Gew.-%, bezogen auf das Gesamtgewicht der Nährlösung, auf. In bevorzugten Ausführungsformen liegt das mindestens eine Sulfoximin in Form einer NMP-freien Formulierung, enthaltend 10 bis 50 Gew.-% Propylencarbonat, vor.

In einer bevorzugten Ausführungsform erfolgt das Verfahren zum Schutz von Saatgut und keimenden Pflanzen zur Verbesserung des Pflanzenwachstums und zur Steigerung der Widerstandfähigkeit von Pflanzen gegen Pflanzenkrankheiten, welche durch Pilze, Bakterien, Viren, MLO und/oder RLO verursacht werden, indem das Saatgut mit einem erfindungsgemäßen Wirkstoff im sogenannten "Float-Verfahren" oder "Floating-Verfahren" angezogen wird (Leal, R. S., The use of Confidor S in the float, a new tobacco seedlings production system in the South of Brazil. Pflanzenschutz-Nachrichten Bayer (Deutsche Ausgabe) (2001), 54(3), Seiten 337 bis 352; Rudolph, R. D.; Rogers, W. D.; The efficacy of imidacloprid treatment for reduction in the severity of insect vectored virus diseases of tobacco. Pflanzenschutz-Nachrichten Bayer (Deutsche Ausgabe) (2001), 54(3), Seiten 311 bis 336). Bei diesem Verfahren wird das Saatgut in speziellen Behältern, z.B. Styropor-Lochtabletts, in spezieller Anzuchterde auf Basis Torf-Kultur-Substrat ausgesät und anschließend in Containern mit geeigneter Nährlösung bis zum Erreichen der gewünschten Verpflanzungsgröße kultiviert (vgl. hierzu die Abbildung 1). Dabei gestattet man den Behältern auf der Nährlösung zu treiben, wovon sich der Name der Anzuchtmethode ableitet (Leal, 2001, s.o.). In Floating-Verfahren werden seit einigen Jahren zur Bekämpfung von saugenden Schädlingen Insektizide aus der Klasse der Neonicotinoide (Chlornikotinyle) eingesetzt.

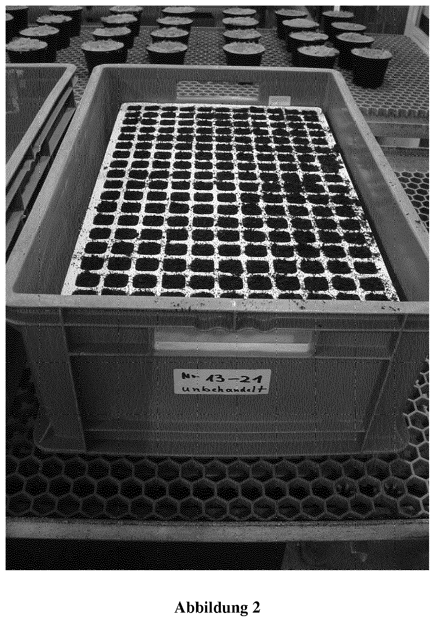

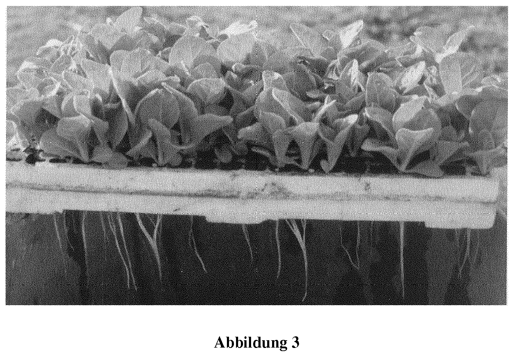

Das Floating-Verfahren wird anhand der beigefügten Abbildungen 1 bis 3 näher erläutert.

Beschrieben ist zudem, dass aufgrund der besonderen systemischen Eigenschaften der hierin beschriebenen Wirkstoffe, insbesondere Sulfoximin (I-8) die Behandlung des Saatguts mit diesen Wirkstoffen nicht nur das Saatgut selbst, sondern auch die daraus hervorgehenden Pflanzen nach dem Auflaufen so schützt, dass das Pflanzenwachstum gesteigert wird und die Widerstandfähigkeit von Pflanzen gegen Pflanzenkrankheiten auf Basis von Pilzen, Bakterien, Viren, MLO und/oder RLO erhöht wird. Auf diese Weise kann die unmittelbare Behandlung der Kultur zum Zeitpunkt der Aussaat oder kurz danach entfallen.

Ebenso ist es als vorteilhaft anzusehen, dass die hierin beschriebenen Wirkstoffe, insbesondere Sulfoximin (I-8), insbesondere auch bei transgenem Saatgut eingesetzt werden können.

Die hierin beschriebenen Wirkstoffe eignen sich zum Schutz und zur Unterstützung von Saatgut jeglicher Pflanzensorte wie bereits vorstehend genannt, die in der Landwirtschaft, im Gewächshaus, in Forsten oder im Gartenbau eingesetzt wird. Insbesondere handelt es sich dabei um Saatgut von Mais, Erdnuss, Canola, Raps, Mohn, Soja, Baumwolle, Rübe (z.B. Zuckerrübe und Futterrübe), Reis, Hirse, Weizen, Gerste, Hafer, Roggen, Sonnenblume, Tabak, Kartoffeln oder Gemüse (z.B. Tomaten, Kohlgewächs). Die erfindungsgemäß zu verwendenden Wirkstoffe eignen sich ebenfalls zur Behandlung des Saatguts von Obstpflanzen und Gemüse wie vorstehend bereits genannt. Besondere Bedeutung kommt der Behandlung des Saatguts von Mais, Soja, Baumwolle, Weizen und Canola oder Raps zu.

Wie vorstehend bereits erwähnt, kommt auch der Behandlung von transgenem Saatgut mit einem erfindungsgemäßen Wirkstoff eine besondere Bedeutung zu.

Beschrieben sitm dass die hierin beschriebenen Wirkstoffe alleine oder in einer geeigneten Formulierung auf das Saatgut aufgebracht werden können. Vorzugsweise wird das Saatgut in einem Zustand behandelt, in dem es so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde.

Im Allgemeinen muss bei der Behandlung des Saatguts darauf geachtet werden, dass die Menge der auf das Saatgut aufgebrachten erfindungsgemäßen Wirkstoffe und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die hierin beschriebenen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die hierin beschriebenen Wirkstoffe können in die üblichen Beizmittel-Formulierungen überführt werden, wie Lösungen, Emulsionen, Suspensionen, Pulver, Schäume, Slurries oder andere Hüllmassen für Saatgut, sowie ULV-Formulierungen.

Diese Formulierungen werden in bekannter Weise hergestellt, indem man die hierin beschriebenen Wirkstoffe mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser.

Als Farbstoffe, die in den e hierin beschriebenen Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den hierin beschriebenen verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutylnaphthalin-Sulfonate.

Als Dispergiermittel und/oder Emulgatoren, die in den hierin beschriebenen verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den hierin beschriebenen Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den hierin beschriebenen Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den hierin beschriebenen Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den hierin beschriebenen Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den hierin beschriebenen Beizmittel-Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die hierin beschriebenen Beizmittel-Formulierungen können entweder direkt oder nach vorherigem Verdünnen mit Wasser zur Behandlung von Saatgut der verschiedensten Art, auch von Saatgut transgener Pflanzen, eingesetzt werden.

Zur Behandlung von Saatgut mit den hierin beschriebenen Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an.

Die hierin beschriebenen Wirkstoffe können im Allgemeinen darüber hinaus in ihren handelsüblichen Formulierungen sowie in den aus diesen Formulierungen bereiteten Anwendungsformen in Mischungen mit anderen Wirkstoffen, wie Insektiziden, Lockstoffen, Sterilantien, Akariziden, Nematiziden, Fungiziden, wachstumsregulierenden Stoffen oder Herbiziden vorliegen.

### Fungizide:

(1) Inhibitoren der Nukleinsäuresynthese, wie beispielsweise Benalaxyl, Benalaxyl-M, Bupirimat, Clozylacon, Dimethirimol, Ethirimol, Furalaxyl, Hymexazol, Metalaxyl, Metalaxyl-M, Ofurace, Oxadixyl und Oxolinsäure.
(2) Inhibitoren der Mitose und Zellteilung, wie beispielsweise Benomyl, Carbendazim, Chlorfenazol, Diethofencarb, Ethaboxam, Fuberidazol, Pencycuron, Thiabendazol, Thiophanat, Thiophanat-Methyl und Zoxamid.
(3) Inhibitoren der Respiration (Atmungsketten-Inhibitoren), wie beispielsweise Diflumetorim als Inhibitor am Komplex I der Atmungskette; Bixafen, Boscalid, Carboxin, Fenfuram, Flutolanil, Fluopyram, Furametpyr, Furmecyclox, Isopyrazam (Mischung aus dem syn-epimeren Razemat 1RS,4SR,9RS und dem anti-epimeren Razemat 1RS,4SR,9SR), Isopyrazam (syn epimeres Razemat 1RS,4SR,9RS), Isopyrazam (syn-epimeres Enantiomer 1R,4S,9R), Isopyrazam (syn-epimeres Enantiomer 1S,4R,9S), Isopyrazam (anti-epimeres Razemat 1RS,4SR,9SR), Isopyrazam (anti-epimeres Enantiomer 1R,4S,9S), Isopyrazam (anti-epimeres Enantiomer 1S,4R,9R),
   Mepronil, Oxycarboxin, Penflufen, Penthiopyrad, Sedaxane, Thifluzamid als Inhibitoren am Komplex II der Atmungskette; Amisulbrom, Azoxystrobin, Cyazofamid, Dimoxystrobin, Enestroburin, Famoxadon, Fenamidon, Fluoxastrobin, Kresoxim-Methyl, Metominostrobin, Orysastrobin, Picoxystrobin, Pyraclostrobin, Pyraoxystrobin, Pyrametostrobin, Pyribencarb, Trifloxystrobin als Inhibitoren am Komplex III der Atmungskette.
(4) Entkoppler, wie beispielsweise Binapacryl, Dinocap, Fluazinam und Meptyldinocap.
(5) Inhibitoren der ATP Produktion, wie beispielsweise Fentin Acetat, Fentin Chlorid, Fentin Hydroxid und Silthiofam.
(6) Inhibitoren der Aminosäure- und Protein-Biosynthese, wie beispielsweise Andoprim, Blasticidin-S, Cyprodinil, Kasugamycin, Kasugamycin Hydrochlorid Hydrat, Mepanipyrim und Pyrimethanil.
(7) Inhibitoren der Signaltransduktion, wie beispielsweise Fenpiclonil, Fludioxonil und Quinoxyfen.
(8) Inhibitoren der Lipid- und Membran-Synthese, wie beispielsweise Biphenyl, Chlozolinat, Edifenphos, Etridiazol, Iodocarb, Iprobenfos, Iprodion, Isoprothiolan, Procymidon, Propamocarb, Propamocarb Hydrochlorid, Pyrazophos, Tolclofos-Methyl und Vinclozolin.
(9) Inhibitoren der Ergosterol-Biosynthese, wie beispielsweise Aldimorph, Azaconazol, Bitertanol, Bromuconazol, Cyproconazol, Diclobutrazol, Difenoconazol, Diniconazol, Diniconazol-M, Dodemorph, Dodemorph Acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-Cis, Hexaconazol, Imazalil, Imazalil Sulfat, Imibenconazol, Ipconazol, Metconazol, Myclobutanil, Naftifin, Nuarimol, Oxpoconazol, Paclobutrazol, Pefurazoat, Penconazol, Piperalin, Prochloraz, Propiconazol, Prothioconazol, Pyributicarb, Pyrifenox, Quinconazol, Simeconazol, Spiroxamin, Tebuconazol, Terbinafin, Tetraconazol, Triadimefon, Triadimenol, Tridemorph, Triflumizol, Triforin, Triticonazol, Uniconazol, Viniconazol und Voriconazol.
(10) Inhibitoren der Zellwandsynthese, wie beispielsweise Benthiavalicarb, Dimethomorph, Flumorph, Iprovalicarb, Mandipropamid, Polyoxins, Polyoxorim, Prothiocarb, Validamycin A und Valefenalat.
(11) Inhibitoren der Melanin-Biosynthese, wie beispielsweise Carpropamid, Diclocymet, Fenoxanil, Fthalid, Pyroquilon und Tricyclazol.
(12) Resistenzinduktoren, wie beispielsweise Acibenzolar-S-Methyl, Probenazol und Tiadinil.
(13) Verbindungen mit Multisite-Aktivität, wie beispielsweise Bordeauxmischung, Captafol, Captan, Chlorothalonil, Kupfernaphthenat, Kupferoxid, Kupferoxychlorid, Kupferzubereitungen, wie Kupferhydroxid, Kupfersulfat, Dichlofluanid, Dithianon, Dodine und dessen freie Base, Ferbam, Fluorofolpet, Folpet, Guazatin, Guazatinacetat, Iminoctadin, Iminoctadinalbesilat, Iminoctadintriacetat, Mankupfer, Mancozeb, Maneb, Metiram, Zinkmetiram, Kupfer-Oxin, Propamidin, Propineb, Schwefel und Schwefelzubereitungen wie beispielsweise Calciumpolysulfid, Thiram, Tolylfluanid, Zineb und Ziram.
(14) Weitere Verbindungen, wie beispielsweise 2,3-Dibutyl-6-chlorthieno[2,3-d]pyrimidin-4(3H)-on, (2Z)-3-Amino-2-cyano-3-phenylprop-2-ensäureethylester, N-[2-(1,3-Dimethylbutyl)phenyl]-5-fluor-1,3-dimethyl-1H-pyrazol-4-carboxamid, 3-(Difluormethyl)-1-methyl-N-(3',4',5'-trifluorbiphenyl-2-yl)-1H-pyrazol-4-carboxamid, 3-(Difluormethyl)-N-[4-fluor-2-(1,1,2,3,3,3-hexafluorpropoxy)phenyl]-1-methyl-1H-pyrazol-4-carboxamid, (2E)-2-(2-{[6-(3-Chlor-2-methylphenoxy)-5-fluorpyrimidin-4-yl]oxy}phenyl)-2-(methoxyimino)-N-methylethanamid, (2E)-2-{2-[({[(2E,3E)-4-(2,6-Dichlorphenyl)but-3-en-2-yliden]amino}oxy)methyl]phenyl}-2-(methoxyimino)-N-methylethanamid, 2-Chlor-N-(1,1,3-trimethyl-2,3-dihydro-1H-inden-4-yl)pyridin-3-carboxamid, N-(3-Ethyl-3,5,5-trimethylcyclohexyl)-3-(formylamino)-2-hydroxybenzamid, 5-Methoxy-2-methyl-4-(2-{[({(1E)-1-[3-(trifluormethyl)phenyl]ethyliden}amino)oxy]methyl}phenyl)-2,4-dihydro-3H-1,2,4-triazol-3-on, (2E)-2-(Methoxyimino)-N-methyl-2-(2-{[({(1E)-1-[3-(trifluormethyl)phenyl]ethyliden}amino)oxy]methyl}phenyl)ethanamid, (2E)-2-(Methoxyimino)-N-methyl-2-{2-[(E)-({1-[3-(trifluormethyl)phenyl]ethoxy}imino)methyl]phenyl}ethanamid, (2E)-2-{2-[({[(1E)-1-(3-{[(E)-1-Fluor-2-phenylethenyl]oxy}phenyl)ethyliden]amino}oxy)methyl]phenyl}-2-(methoxyimino)-N-methylethanamid, 1-(4-Chlorphenyl)-2-(1H-1,2,4-triazol-1-yl)cycloheptanol, 1-(2,2-Dimethyl-2,3-dihydro-1H-inden-1-yl)-1H-imidazol-5-carbonsaeuremethylester, N-Ethyl-N-methyl-N'-{2-methyl-5-(trifluormethyl)-4-[3-(trimethylsilyl)propoxy]phenyl}imidoformamid, N'-{5-(Difluormethyl)-2-methyl-4-[3-(trimethylsilyl)propoxy]phenyl}-N-ethyl-N-methylimidoformamid, O-{1-[(4-Methoxyphenoxy)methyl]-2,2-dimethylpropyl} 1H-imidazol-1-carbothioat, N-[2-(4-{[3-(4-Chlorphenyl)prop-2-yn-1-yl]oxy}-3-methoxyphenyl)ethyl]-N²-(methylsulfonyl)valinamid, 5-Chlor-7-(4-methylpiperidin-1-yl)-6-(2,4,6-trifluorphenyl) [1 ,2,4]triazolo[1 ,5-a]pyrimidin, 5-Amino-1,3,4-thiadiazol-2-thiol, Propamocarb-Fosetyl, 1-[(4-Methoxyphenoxy)methyl]-2,2-dimethylpropyl 1H-imidazol-1-carboxylat, 1-Methyl-N-[2-(1,1 ,2,2-tetrafluorethoxy)phenyl]-3-(trifluormethyl)-1H-pyrazol-4-carboxamid, 2,3,5,6-Tetrachlor-4-(methylsulfonyl)pyridin, 2-Butoxy-6-iod-3-propyl-4H-chromen-4-on, 2-Phenylphenol und dessen Salze, 3-(Difluormethyl)-1-methyl-N-[2-(1,1,2,2-tetrafluorethoxy)phenyl]-1H-pyrazol-4-carboxamid, 3,4,5-Trichlorpyridin-2,6-dicarbonitril, 3-[5-(4-Chlorphenyl)-2,3-dimethylisoxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, 8-Hydroxychinolin, 8-Hydroxychinolinsulfat, Tebufloquin, 5-Methyl-6-octyl-3,7-dihydro[1,2,4]triazolo[1,5-a]pyrimidin-7-amin, 5-Ethyl-6-octyl-3,7-dihydro[1,2,4]triazolo[1,5-a]pyrimidin-7-amin, Ametoctradin, Benthiazol, Bethoxazin, Capsimycin, Carvon, Chinomethionat, Chloroneb, Cufraneb, Cyflufenamid, Cymoxanil, Cyprosulfamide, Dazomet, Debacarb, Dichlorophen, Diclomezin, Dicloran, Difenzoquat, Difenzoquat Methylsulphat, Diphenylamin, Ecomat, Ferimzon, Flumetover, Fluopicolid, Fluoromid, Flusulfamid, Flutianil, Fosetyl-Aluminium, Fosetyl-Calcium, Fosetyl-Natrium, Hexachlorbenzol, Irumamycin, Isotianil, Methasulfocarb, (2E)-2-{2-[({Cyclopropyl [(4-methoxyphenyl)imino]methyl}thio)methyl]phenyl}-3-methoxyacrylsaeuremethylester, Methylisothiocyanat, Metrafenon, (5-Chlor-2-methoxy-4-methylpyridin-3-yl)(2,3,4-trimethoxy-6-methylphenyl)methanon, Mildiomycin, Tolnifanid, N-(4-Chlorbenzyl)-3-[3-methoxy-4-(prop-2-yn-1-yloxy)phenyl]propanamid, N-[(4-Chlorphenyl)(cyano)methyl]-3-[3-methoxy-4-(prop-2-yn-1-yloxy)phenyl]propanamid, N-[(5-Brom-3-chlorpyridin-2-yl)methyl]-2,4-dichlorpyridin-3-carboxamid, N-[1-(5-Brom-3-chlorpyridin-2-yl)ethyl]-2,4-dichlorpyridin-3-carboxamid, N-[1-(5-Brom-3-chlorpyridin-2-yl)ethyl]-2-fluor-4-iodpyridin-3-carboxamid, N-{(Z)-[(Cyclopropylmethoxy)imino][6-(difluormethoxy)-2,3-difluorphenyl]methyl}-2-phenylacetamid, N-{(E)-[(Cyclopropylmethoxy)imino][6-(difluormethoxy)-2,3-difluorphenyl]methyl}-2-phenylacetamid, Natamycin, Nickel Dimethyldithiocarbamat, Nitrothal-Isopropyl, Octhilinone, Oxamocarb, Oxyfenthiin, Pentachlorphenol und dessen Salze, Phenazin-1-carbonsäure, Phenothrin, Phosphorsäure und deren Salze, Propamocarb Fosetylat, Propanosin-Natrium, Proquinazid, Pyrrolnitrin, Quintozen, S-Prop-2-en-1-yl 5-amino-2-(1-methylethyl)-4-(2-methylphenyl)-3-oxo-2,3-dihydro-1H-pyrazol-1-carbothioat, Tecloftalam, Tecnazene, Triazoxid, Trichlamid, 5-Chlor-N'-phenyl-N'-prop-2-yn-1-ylthiophen-2-sulfonohydrazid, Zarilamid, N-Methyl-2-(1-{[5-methyl-3-(trifluormethyl)-1H-pyrazol-1-yl]acetyl }piperidin-4-yl)-N-[(1R)-1,2,3,4-tetrahydronaphthalen-1-yl]-1,3-thiazol-4-carboxamid, N-Methyl-2-(1-{[5-methyl-3-(trifluormethyl)-1H-pyrazol-1-yl] acetyl }piperidin-4-yl)-N-(1,2,3,4-tetrahydronaphthalen-1-yl)-1,3-thiazol-4-carboxamid, 3-(Difluormethyl)-N-[4-fluor-2-(1,1,2,3,3,3-hexafluorpropoxy)phenyl]-1-methyl-1H-pyrazol-4-carboxamid und Pentyl-{6-[({[(1-methyl-1H-tetrazol-5-yl)(phenyl)methyliden]amino}oxy)methyl]pyridin-2-yl} carbamat.

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

Die in dieser Beschreibung mit ihrem "common name" genannten Wirkstoffe sind beispielsweise aus "The Pesticide Manual" 14th Ed., British Crop Protection Council 2006, und der Webseite http://www.alanwood.net/pesticides bekannt.
(1) Acetylcholinesterase (AChE) Inhibitoren, wie beispielsweise Carbamate, z.B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb; oder
   Organophosphate, z.B. Acephate, Azamethiphos, Azinphos (-methyl, -ethyl), Cadusafos, Chlorethoxyfos, Chlorfenvinphos, Chlormephos, Chlorpyrifos (-methyl), Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Isofenphos, Isopropyl *O*-(methoxyaminothio-phosphoryl) salicylate, Isoxathion, Malathion, Mecarbam, Methamidophos, Methidathion, Mevinphos, Monocrotophos, Naled, Omethoate, Oxydemeton-methyl, Parathion (-methyl), Phenthoate, Phorate, Phosalone, Phosmet, Phosphamidon, Phoxim, Pirimiphos (-methyl), Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triazamate, Triclorfon und Vamidothion.
(2) GABA-gesteuerte Chlorid-Kanal-Antagonisten, wie beispielsweise Organochlorine, z.B. Chlordane und Endosulfan (alpha-); oder Fiprole (Phenylpyrazole), z.B. Ethiprole, Fipronil, Pyrafluprole und Pyriprole.
(3) Natrium-Kanal-Modulatoren / Spannungsabhängige Natrium-Kanal-Blocker, wie beispielsweise Pyrethroide, z.B. Acrinathrin, Allethrin (d-cis-trans, d-trans), Bifenthrin, Bioallethrin, Bioallethrin-S-cyclopentenyl, Bioresmethrin, Cycloprothrin, Cyfluthrin (beta-), Cyhalothrin (gamma-, lambda-), Cypermethrin (alpha-, beta-, theta-, zeta-), Cyphenothrin [(1*R*)-*trans*-Isomere], Deltamethrin, Dimefluthrin, Empenthrin [(*EZ*)-(1*R*)-Isomere], Esfenvalerate, Etofenprox, Fenpropathrin, Fenvalerate, Flucythrinate, Flumethrin, Fluvalinate (tau-), Halfenprox, Imiprothrin, Metofluthrin, Permethrin, Phenothrin [(1*R*)-trans-Isomer], Prallethrin, Profluthrin, Pyrethrine (pyrethrum), Resmethrin, RU 15525, Silafluofen, Tefluthrin, Tetramethrin [(1*R*)- Isomere], Tralomethrin, Transfluthrin und ZXI 8901; oder DDT; oder Methoxychlor.
(4) Nikotinerge Acetylcholin-Rezeptor-Agonisten, wie beispielsweise Neonikotinoide, z.B. Acetamiprid, Clothianidin, Dinotefuran, Imidacloprid, Nitenpyram, Thiacloprid, Thiamethoxam; oder Nikotin.
(5) Allosterische Acetylcholin-Rezeptor-Modulatoren (Agonisten), wie beispielsweise Spinosyne, z.B. Spinetoram und Spinosad.
(6) Chlorid-Kanal-Aktivatoren, wie beispielsweise Avermectine/Milbemycine, z.B. Abamectin, Emamectin-benzoate, Lepimectin und Milbemectin.
(7) Juvenilhormon-Analoge, z.B. Hydroprene, Kinoprene, Methoprene; oder Fenoxycarb; Pyriproxyfen.
(8) Wirkstoffe mit unbekannten oder nicht spezifischen Wirkmechanismen, wie beispielsweise Begasungsmittel, z.B. Methylbromid und andere Alkylhalogenide; oder Chloropicrin; Sulfurylfluorid; Borax; Brechweinstein.
(9) Selektive Fraßhemmer, z.B. Pymetrozine; oder Flonicamid.
(10) Milbenwachstumsinhibitoren, z.B. Clofentezine, Diflovidazin, Hexythiazox, Etoxazole.
(11) Mikrobielle Disruptoren der Insektendarmmembran, wie beispielsweise *Bacillus thuringiensis* subsp. *israelensis, Bacillus sphaericus, Bacillus thuringiensis* subsp. *aizawai, Bacillus thuringiensis* subsp. *kurstaki, Bacillus thuringiensis* subsp. *tenebrionis,* und BT-Pflanzen-Proteine, z.B. Cry1Ab, Cry1Ac, Cry1Fa, Cry2Ab, mCry3A, Cry3Ab, Cry3Bb, Cry34/35Ab1.
(12) Inhibitoren der oxidativen Phosphorylierung, ATP-Disruptoren, wie beispielsweise Diafenthiuron; oder Organozinnverbindungen, z.B. Azocyclotin, Cyhexatin, Fenbutatin oxide; oder Propargite; Tetradifon.
(13) Entkoppler der oxidativen Phoshorylierung durch Unterbrechung des H-Protongradienten, wie beispielsweise Chlorfenapyr und DNOC.
(14) Nikotinerge Acetylcholin-Rezeptor-Antagonisten, wie beispielsweise Bensultap, Cartap (-Hydrochlorid), Thiocylam, und Thiosultap (-Natrium).
(15) Inhibitoren der Chitinbiosynthese, Typ 0, wie beispielsweise Benzoylharnstoffe, z.B. Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1, wie beispielsweise Buprofezin.
(17) Häutungsstörende Wirkstoffe, wie beispielsweise Cyromazine.
(18) Ecdysonagonisten/-disruptoren, wie beispielsweise
   Diacylhydrazine, z.B. Chromafenozide, Halofenozide, Methoxyfenozide und Tebufenozide.
(19) Oktopaminerge Agonisten, wie beispielsweise Amitraz.
(20) Seite-III-Elektronentransportinhibitoren/Seite-II-Elektronentransportinhibitoren, wie beispielsweise Hydramethylnon; Acequinocyl; Fluacrypyrim; oder Cyflumetofen und Cyenopyrafen.
(21) Elektronentransportinhibitoren, wie beispielsweise Seite-I-Elektronentransportinhibitoren, aus der Gruppe der METI-Akarizide, z.B. Fenazaquin, Fenpyroximate, Pyrimidifen, Pyridaben, Tebufenpyrad, Tolfenpyrad; oder Rotenone (Derris).
(22) Spannungsabhängige Natriumkanal-Blocker, z.B. Indoxacarb; Metaflumizone.
(23) Inhibitoren der Acetyl-CoA-Carboxylase, wie beispielsweise Tetronsäure-Derivate, z.B. Spirodiclofen und Spiromesifen; oder Tetramsäure-Derivate, z.B. Spirotetramat.
(24) Seite-IV-Elektronentransportinhibitoren, wie beispielsweise Phosphine, z.B. Aluminiumphosphid, Kalziumphosphid, Phosphin, Zinkphosphid; oder Cyanid.
(28) Ryanodinrezeptor-Effektoren, wie beispielsweise Diamide, z.B. Chlorantraniliprole (Rynaxypyr), Cyantraniliprole (Cyazypyr) und Flubendiamide.
Weitere Wirkstoffe mit unbekanntem Wirkmechanismus, wie beispielsweise Azadirachtin, Amidoflumet, Benzoximate, Bifenazate, Chinomethionat, Cryolite, Dicofol, Flufenerim, Pyridalyl und Pyrifluquinazon; oder folgende bekannte wirksame Verbindungen 4-{[(6-Brompyrid-3-yl)methyl](2-fluorethyl)amino}furan-2(5H)-on (bekannt aus WO 2007/115644), 4-{[(6-Fluorpyrid-3-yl)methyl](2,2-difluorethyl)amino}furan-2(5H)-on (bekannt aus WO 2007/115644), 4-{[(2-Chlor-1,3-thiazol-5-yl)methyl](2-fluorethyl)amino}furan-2(5H)-on (bekannt aus WO 2007/115644), 4-{[(6-Chlorpyrid-3-yl)methyl](2-fluorethyl)amino}furan-2(5H)-on (bekannt aus WO 2007/ 115644), 4-{[(6-Chlorpyrid-3-yl)methyl](2,2-difluorethyl)amino}furan-2(5H)-on (bekannt aus WO 2007/115644), 4-{[(6-Chlor-5-fluorpyrid-3-yl)methyl](methyl)amino}furan-2(5H)-on (bekannt aus WO 2007/115643), 4-{[(5,6-Dichlorpyrid-3-yl)methyl](2-fluorethyl)amino}furan-2(5H)-on (bekannt aus WO 2007/115646), 4-{[(6-Chlor-5-fluorpyrid-3-yl)methyl](cyclopropyl)amino}furan-2(5H)-on (bekannt aus WO 2007/115643), 4-{[(6-Chlorpyrid-3-yl)methyl](cyclopropyl)amino}furan-2(5H)-on (bekannt aus EP-A-0 539 588), 4-{[(6-Chlorpyrid-3-yl)methyl](methyl)amino}furan-2(5H)-on (bekannt aus EP-A-0 539 588), [(6-Chlorpyridin-3-yl)methyl](methyl)oxido-λ⁴-sulfanylidencyanamid (bekannt aus WO 2007/149134), [1-(6-Chlorpyridin-3-yl)ethyl](methyl)oxido-λ⁴-sulfanylidencyanamid (bekannt aus WO 2007/149134) und seine Diastereomere (A) und (B) 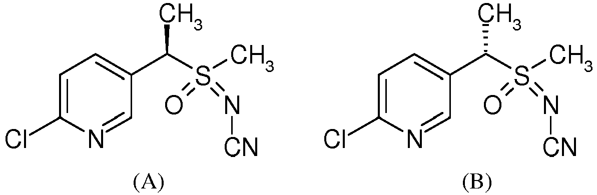 (ebenfalls bekannt aus WO 2007/149134), [(6-Trifluormethylpyridin-3-yl)methyl](methyl)oxido-λ⁴-sulfanylidencyanamid (bekannt aus WO 2007/095229), Sulfoxaflor
(ebenfalls bekannt aus WO 2007/149134), 11-(4-Chlor-2,6-dimethylphenyl)-12-hydroxy-1,4-dioxa-9-azadispiro[4.2.4.2]tetradec-11-en-10-on (bekannt aus WO 2006/089633), 3-(4'-Fluor-2,4-dimethylbiphenyl-3-yl)-4-hydroxy-8-oxa-1-azaspiro[4.5]dec-3-en-2-on (bekannt aus WO 2008/067911) und 1-{2,4-Dimethyl-5-[(2,2,2-trifluoroethyl)sulfinyl]phenyl}-3-(trifluoromethyl)-1H-1,2,4-triazol (bekannt aus WO 1999/55668).

### Beschreibung der Abbildungen

- Abbildung 1:: Floating Box gefüllt mit Nährlösung.
- Abbildung 2:: Floating Box mit schwimmendem Styropor-Anzuchtschalen, befüllt mit Anzuchterde und Tabaksamen.
- Abbildung 3:: Styropor-Anzuchtschalen mit Tabakpflanzen nach der Anzucht in einer Floating Box.

### Beispiel 1

### Wurzelwachstumstest Tomaten bei Sauerstoffmangel in der Nährlösung

Zur Herstellung einer zweckmäßigen Präparatelösung vermischt man 1 Gewichtsteil Wirkstoff mit Wasser auf die gewünschte Konzentration.

Tomatensamen (*Solanum lycopersicum* '*Rentita*') werden in Steinwolle angezogen. Nach der Keimung werden die Steinwollblöcke in eine mit der Präparatlösung versehene Floating Box transferiert und unter geeigneten klimatischen Bedingungen weiter kultiviert.

Die Nährlösung der Floating Box wurde nicht belüftet (Sauerstoffmangel-Stress).

Nach der gewünschten Zeit wird die maximale Länge der Wurzel pro Tomatenpflanze gemessen und die durchschnittliche Wurzellänge pro Floating Box und Behandlung berechnet.

Bei diesem Test zeigte sich, dass die erfindungsgemäße Verbindung der Kontrolle überlegen sind:

**Tabelle 1: Wurzelwachstum Tomaten**

| **Wirkstoff** | **Konzentration in mg ai/Pflanze** | **Länge in cm nach 4^{d}** |
|---|---|---|
| **Verbindung (I-8) Sulfoxaflor** | 1,0 | 6,7 |
| **Kontrolle** | | 1,9 |

## Patentansprüche

1. Verwendung von Verbindung (I-8) [6-Trifluormethyl-pyridin-3-yl]ethyl](methyl)oxido-λ⁴-sulfanyliden-cyanamid 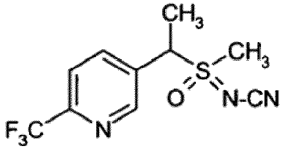 zur Verbesserung des Pflanzenwachstums und/oder zur Steigerung der Widerstandsfähigkeit von Pflanzen gegenüber abiotischen Stressfaktoren.

2. Verwendung nach Anspruch 1 **dadurch gekennzeichnet, dass** die mit Verbindung (I-8) behandelte Pflanze transgen ist.

3. Verwendung nach einem der Ansprüche 1 oder 2, **dadurch gekennzeichnet, dass** Verbindung (I-8) in Kombination mit zumindest einem Düngemittel verwendet wird.

## Claims

1. Use of compound (1-8) N-[6-trifluoromethylpyridin-3-yl]ethyl](methyl)oxido-λ⁴-sulphanylidenecyanamide 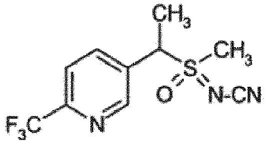 or for improving plant growth and/or for enhancing the resistance of plants to abiotic stress factors.

2. Use according to Claim 1, **characterized in that** the plant treated with compound (1-8) is transgenic.

3. Use according to one of Claims 1 and 2, **characterized in that** compound (1-8) is used in combination with at least one fertilizer.

## Revendications

1. Utilisation d'un composé (1-8) [6-trifluorométhyl-pyridin-3-yl]éthyl](méthyl)oxydo-λ⁴-sulfanylidène-cyanamide 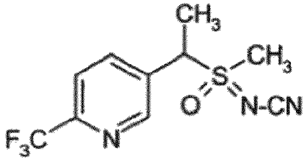 pour améliorer la croissance de plantes et/ou pour augmenter la résistance de plantes à des facteurs de stress abiotiques.

2. Utilisation selon la revendication 1, **caractérisée en ce que** la plante traitée avec le composé (1-8) est transgénique.

3. Utilisation selon l'une quelconque des revendications 1 ou 2, **caractérisée en ce que** le composé (1-8) est utilisé en combinaison avec au moins un engrais.
